# EUROPÄISCHE PATENTSCHRIFT

(11) **EP 4 121 795 B1**
(45) Veröffentlichungstag und Bekanntmachung des Hinweises auf die Patenterteilung: **27.11.2024**
(21) Anmeldenummer: 21707950.8
(22) Anmeldetag: 23.02.2021
(51) Int. Cl.: G01S 7/497, G01S 17/10, G01S 17/46, G01S 17/86, G01S 17/931

(54) **TEST-SYSTEM ZUM TESTEN EINER LIDAR-VORRICHTUNG**
TEST SYSTEM FOR TESTING A LIDAR DEVICE
SYSTÈME DE TEST POUR TESTER UN DISPOSITIF LIDAR

(30) Priorität: 20.03.2020 DE 102020107802
(43) Veröffentlichungstag der Anmeldung: 25.01.2023
(73) Patentinhaber: HORIBA Europe GmbH, 64293 Darmstadt (DE)
(72) Erfinder: ENGELBERT, André, 42289 Wuppertal (DE)
(74) Vertreter: Müller Hoffmann & Partner
(86) Internationale Anmeldenummer: PCT/EP2021/054401
(87) Internationale Veröffentlichungsnummer: WO 2021/185537

(56) Entgegenhaltungen:
- DE-A1- 102016 218 277
- US-A- 4 342 514
- US-A- 5 281 813
- GAO YANZE ET AL: "A Programmable All-Optical Delay Array for Light Detection and Ranging Scene Generation", IEEE ACCESS, vol. 7, 29 July 2019 (2019-07-29), pages 93489 - 93500, XP011736549, DOI: 10.1109/ACCESS.2019.2928018

## Beschreibung

Die Erfindung betrifft ein Test-System zum Testen einer LIDAR-Vorrichtung, insbesondere einer an einem Kraftfahrzeug vorgesehenen LIDAR-Vorrichtung. Zudem betrifft die Erfindung ein Verfahren zum Testen einer derartigen LIDAR-Vorrichtung und einen Fahrzeugprüfstand zum Prüfen eines Fahrzeugs.

Im Zuge der Entwicklung von autonom fahrenden Kraftfahrzeugen werden diese zunehmend mit verschiedenen Arten von Sensoren ausgestattet. Zu diesen Sensoren gehören Kameras (z.B. 360° Kameras) und Radaranlagen, die die Fahrzeugumgebung überwachen sollen. Für autonome Fahrzeuge ist es zudem wichtig, dass nicht nur Hindernisse erkannt, sondern auch Objekte in der Fahrzeugumgebung identifiziert werden können. Zu diesem Zweck werden zunehmend auch LIDAR-Geräte (Light Detection And Ranging) in Fahrzeugen eingebaut. Dabei handelt es sich um Geräte mit einer dem Radar verwandten Methode zur optischen Abstands- und Geschwindigkeitsmessung, wobei statt Radiowellen wie beim Radar Laserstrahlen verwendet werden. Die Laserstrahlen liegen dabei im Infrarotbereich, insbesondere im nahen Infrarotbereich (NIR), um andere Verkehrsteilnehmer im Straßenverkehr nicht durch sichtbares Licht der Laserstrahlen zu irritieren.

Die Funktionsweise von LIDAR-Geräten ist bekannt, so dass an dieser Stelle eine weitergehende Beschreibung nicht erforderlich ist.

LIDAR-Systeme arbeiten mit gepulsten Lichtstrahlen (nachfolgend auch als Lichtimpuls oder Lichtpuls bezeichnet). Die Geräte erzeugen auf diese Weise ein künstliches Bild der Umgebung um das Fahrzeug, von dem aus die Lichtstrahlen abgegeben werden. Je nach Sensortyp entstehen dabei Daten als Punktwolken oder als segmentiertes Abbild.

Für autonome Fahrzeuge ist die Funktion der LIDAR-Geräte essentiell und sicherheitskritisch. Ohne die Messergebnisse der kontinuierlich die Umgebung scannenden LIDAR-Geräte kann das Fahrzeug nicht oder nur mit Einschränkungen autonom bewegt werden.

Daher müssen LIDAR-Geräte aufwendig getestet werden. Dies erfolgt einerseits mit Systemtests in einer Laborumgebung. Andererseits werden die fertigen einsatzfähigen Fahrzeuge in Praxistests auf realen Straßen oder Teststrecken eingesetzt, um die Funktionsweise und Zuverlässigkeit der verbauten LIDAR-Geräte zu prüfen.

Zum Prüfen von LIDAR-Geräten können auf Teststrecken entsprechende Situationen simuliert werden, in denen zum Beispiel künstliche Fahrzeuge oder Menschen (Puppen) genutzt werden, die auf beweglichen Plattformen relativ zu dem zu prüfenden Fahrzeug verschoben oder von anderen Fahrzeugen gezogen werden. Auch diese Tests sind sehr aufwendig, zumal sie erst in einem relativ späten Entwicklungsstadium durchgeführt werden können, in dem das mit dem jeweiligen LIDAR-Gerät ausgestattete Fahrzeug bereits weitgehend ausentwickelt ist.

Die Prüfung unter realen Straßenbedingungen außerhalb von Teststrecken ist ebenfalls sehr aufwendig und kostenintensiv.

Aus GAO YANZE ET AL: "A Programmable All-Optical Delay Array for Light Detection and Ranging Scene Generation", IEEE ACCESS, Bd. 7, 29. Juli 2019 (2019-07-29), Seiten 93489-93500, ist ein System mit einem LIDAR Szenengenerator bekannt, der simulierte optische LIDAR Szenen unter Laborbedingungen generiert. Die simulierten Szenen können direkt in ein zu testendes LIDAR Leitsystem eingespeist werden.

In der DE 10 2016 218 277 A1 wird ein Verfahren zur Funktionsprüfung eines Fahrassistenzsystems beschrieben. Das Fahrassistenzsystem umfasst ein Sensorsystem zur Erfassung der Umgebung des Fahrzeugs. Anstelle der normalen Umgebung kann das Sensorsystem auch ein künstliches Target als Reiz erfassen.

Aus der US 5 281 813 A ist ein Testsystem für einen Laser-Entfernungsmesser bekannt, bei dem ein Detektor in der Nähe einer Laserquelle angeordnet ist und das Auftreten eines ersten Laserstrahls detektiert. Dadurch kann ein zweites Lasersignal mit einer zeitlichen Verzögerung ausgelöst werden, um den Laser-Entfernungsmesser zu testen.

Eine ähnliche Anordnung ist auch aus der US 4 342 514 A bekannt.

Der Erfindung liegt die Aufgabe zugrunde, ein Test-System zum Testen einer LIDAR-Vorrichtung anzugeben, mit dem der beim realen Straßenbetrieb bzw. Betrieb auf einer Teststrecke entstehende Aufwand verringert werden kann.

Die Aufgabe wird erfindungsgemäß gelöst durch ein Test-System zum Testen einer LIDAR-Vorrichtung entsprechend dem unabhängigen Anspruch 1, sowie durch ein entsprechendes Testverfahren zum Testen einer derartigen LIDAR-Vorrichtung entsprechend dem unabhängigen Anspruch 12. Das Test-System kann vorteilhaft in einem Fahrzeugprüfstand zum Prüfen eines Fahrzeugs eingesetzt werden. Vorteilhafte Ausgestaltungen der Erfindung sind in den abhängigen Ansprüchen angegeben.

Es wird ein Test-System zum Testen einer LIDAR-Vorrichtung angegeben, mit einer Steuerung zum Generieren von LIDAR-Informationen zu einem künstlichen LIDAR-Objekt auf der Basis eines für einen Testvorgang nachzubildenden realen Objekts, wobei die LIDAR-Informationen wenigstens eine zweidimensionale Umriss-Information und eine Tiefeninformation zu einer virtuellen Entfernung des künstlichen LIDAR-Objekts umfassen; und mit einer LIDAR-Bilderzeugungsvorrichtung zum Erzeugen des künstlichen LIDAR-Objekts auf der Basis der LIDAR-Informationen; und mit einer LIDAR-Projektionsvorrichtung zum Projizieren des künstlichen LIDAR-Objekts auf eine Projektionsfläche.

Mit Hilfe des Test-Systems ist es möglich, ein reales Objekt als künstliches LIDAR-Objekt (Avatar) nachzubilden. Dazu werden zum Kreieren einer Testumgebung LIDAR-Informationen definiert und generiert. Zum Beispiel kann zum Testen der LIDAR-Vorrichtung vorgegeben werden, dass ein vorausfahrendes Fahrzeug erkannt werden soll, das sich langsamer fortbewegt als die LIDAR-Vorrichtung bzw. ein die LIDAR-Vorrichtung tragendes Fahrzeug. Zum Beispiel kann auf diese Weise ein vorausfahrender Lkw simuliert bzw. als künstliches LIDAR-Objekt generiert werden.

Zur Erzeugung des künstlichen LIDAR-Objekts ist dabei wenigstens die zweidimensionale Umrissfläche (bei einem Lkw zum Beispiel ein Rechteck) und eine Tiefeninformation bzw. Entfernungsinformation notwendig. Die Entfernungsinformation gibt dabei insbesondere an, wie weit entfernt das künstliche LIDAR-Objekt von der LIDAR-Vorrichtung in dem gewählten Testszenario sein soll.

Selbstverständlich können dabei Szenarien aus verschiedenen künstlichen LIDAR-Objekten entworfen werden, die als Testszenarien genutzt werden sollen. Dazu gehören außer vorausfahrenden Fahrzeugen (Pkws, Lkws, Motorräder, Fahrradfahrer) auch z.B. statische Hindernisse (Leitplanken, Gebäude, Bäume, bauliche Hindernisse), Menschen (Fußgänger am Fahrbahnrand, die Fahrbahn kreuzende Fußgänger, Zebrastreifen, etc.) und so weiter. Da die LIDAR-Vorrichtung zur Unterstützung eines autonomen Fahrzeugs dienen soll, können dementsprechend nahezu beliebige reale Objekte, die im realen Straßenverkehr auftreten können, als künstliche LIDAR-Objekte nachgebildet werden.

Die Steuerung ist in der Lage, das künstliche LIDAR-Objekt zu generieren. Die dafür notwendigen Daten, die sich in der Regel aus den vorgegebenen Testszenarien ergeben, können durch die Steuerung in geeigneter Weise aufbereitet werden, um taugliche künstliche LIDAR-Objekte bereitzustellen.

Auf der Basis der künstlichen LIDAR-Objekte wird mit Hilfe der LIDAR-Bilderzeugungsvorrichtung und der LIDAR-Projektionsvorrichtung ein künstliches Antwortbild simuliert. Dieses künstliche Antwortbild entsprechend dem künstlichen LIDAR-Objekt entspricht einem Bild, das die LIDAR-Vorrichtung unter realen Bedingungen, also zum Beispiel im realen Straßenverkehr, von dem erfassten realen Objekt wahrnehmen und als Bild umsetzen würde.

Nach dem Arbeitsprinzip von LIDAR würde dabei ein Infrarot-Laserstrahl von der LIDAR-Vorrichtung ausgesendet und der reflektierte Strahl erfasst und ausgewertet. Die Lichtstrahlen werden dabei in Form von Lichtimpulsen gepulst und können größere Flächen abdecken, um Flächen und Tiefeninformationen der auf diese Weise abgescannten Umgebung zu umfassen.

Die dabei durch den Empfänger an der LIDAR-Vorrichtung erfassten Bilder können bei dem Test-System durch die LIDAR-Bilderzeugungsvorrichtung und die LIDAR-Projektionsvorrichtung simuliert werden. Die LIDAR-Projektionsvorrichtung projiziert insbesondere mit Lichtimpulsen (Infrarot- Lichtimpulsen) das künstliche LIDAR-Objekt auf die Projektionsfläche, von wo aus das reflektierte Licht durch den Empfänger an der LIDAR-Vorrichtung detektiert werden kann. Für den Empfänger an der LIDAR-Vorrichtung ist dabei nicht erkennbar, dass es sich um künstlich erzeugtes Licht und nicht um einen reflektierten Lichtimpuls handelt.

Die Tiefeninformation als Bestandteil der LIDAR-Informationen kann wenigstens eindimensional sein und insbesondere auf der Laufzeit eines Lichtimpulses, insbesondere eines Infrarot- Lichtimpulses (zum Beispiel NIR-Licht durch einen Laser) beruhen. Bei der Tiefeninformation, wie aber auch bei der Umriss-Information wird die Entfernung und die Geschwindigkeit des als künstliches LIDAR-Objekt nachgebildeten realen Objekts umgesetzt. Die beiden Informationen können dementsprechend veränderlich sein, um die Bewegung des künstlichen LIDAR-Objekts nachzubilden.

Die Projektionsfläche kann vielfältig ausgebildet sein. Sie dient der "Visualisierung" des LIDAR-Objekts, zum Beispiel auf einer Leinwand oder einer Mattscheibe. "Visualisierung" bedeutet dabei das Sichtbarmachen für einen Infrarot-Empfänger in der LIDAR-Vorrichtung, nicht aber ein Sichtbarmachen für Menschen.

Die Tiefeninformation kann bestimmt werden aufgrund einer tatsächlichen (realen) Entfernung zwischen der Projektionsfläche und der zu testenden LIDAR-Vorrichtung und aufgrund einer virtuellen Entfernung des künstlichen LIDAR-Objektes. Dementsprechend muss die Tiefeninformation auf einer zeitlichen Komponente basieren, die berechnet bzw. festgelegt wird, um die (virtuelle) Entfernung zwischen der LIDAR-Vorrichtung und dem LIDAR-Objekt zu simulieren.

Insbesondere wird unter Berücksichtigung der Lichtgeschwindigkeit die Laufzeit der das LIDAR-Objekt zeichnenden Lichtimpulse als zeitliche Komponente bestimmt. Dabei wird berücksichtigt, wie lange das Licht beim realen Betrieb der LIDAR-Vorrichtung von dem in der LIDAR-Vorrichtung vorhandenen Licht-Sender (Emitter) bis zu dem zu erkennenden Objekt und - nach Reflexion an dem Objekt - wieder zurück zu dem in der LIDAR-Vorrichtung vorhandenen Licht-Empfänger (Sensor) benötigen würde. Aufgrund dieser aus den realen Verhältnissen abgeleiteten Zeitspanne (time-of-flight) simuliert die Steuerung das Aussenden des jeweiligen Lichtimpulses derart, dass er im Test-Betrieb der LIDAR-Vorrichtung und damit zum Erzeugen des künstlichen LIDAR-Objektes ebenfalls nach Ablauf dieser Zeitspanne von dem Licht-Empfänger empfangen werden kann. Der LIDAR-Vorrichtung wird somit vorgetäuscht, dass sich das künstliche LIDAR-Objekt ebenfalls in der dem realen Objekt entsprechenden Entfernung befindet, obwohl es tatsächlich in (viel) kürzerem Abstand auf die Projektionsfläche projiziert ist.

Da der Abstand zwischen der LIDAR-Vorrichtung und der Projektionsfläche geringer ist als die zu erzielende (virtuelle) Entfernung zwischen der LIDAR-Vorrichtung und dem künstlichen LIDAR-Objekt, muss der Lichtpuls mit einer zeitlichen Verzögerung (Delay) erzeugt werden, die von der Steuerung entsprechend bestimmt wird.

Als Beispiel wurde oben bereits ein Lkw angegeben, dessen Umrissinformation als rechteckige Fläche simuliert werden kann. Die Tiefeninformation, zum Beispiel eine Entfernung von 60 m von der LIDAR-Vorrichtung, muss durch die Laufzeit des Lichtimpulses bestimmt werden. So wird aus der für das Testszenario vorgegebene Zielangabe "60 m Entfernung" ausgerechnet, wie lange ein Lichtimpuls vom Absenden durch die LIDAR-Vorrichtung bis zum Empfangen durch die LIDAR-Vorrichtung benötigen würde. Die LIDAR-Projektionsvorrichtung wird derart angesteuert, dass der das künstliche LIDAR-Objekt zeichnende IR- Lichtimpuls die zu testende LIDAR-Vorrichtung zu dem Zeitpunkt erreicht, zu dem auch das von dem zu simulierenden realen Lkw reflektierte Licht wieder die LIDAR-Vorrichtung erreichen würde.

Die LIDAR-Projektionsvorrichtung kann insbesondere eine IR-Laservorrichtung aufweisen, zum Projizieren des LIDAR-Objekts als Infrarotbild auf der Projektionsfläche. Dabei kann das Infrarotbild flächig oder auch durch Lichtimpulse gezeichnet werden. Insbesondere kommt dabei ein NIR-Laser zum Einsatz. Ebenso können auch IR-LED-Lichtquellen genutzt werden.

Es kann eine LIDAR-Detektionsvorrichtung vorgesehen sein, zum Abfangen und Erkennen von einem von der zu testenden LIDAR-Vorrichtung abgegebenen Lichtimpuls. Dabei ist zu beachten, dass das Arbeitsprinzip der LIDAR-Vorrichtung darin besteht, einen Lichtstrahl (IR-Lichtimpuls) auszusenden und nach Reflexion an dem zu erkennenden Objekt wieder durch die LIDAR-Vorrichtung zu empfangen. Zu diesem Zweck weist die LIDAR-Vorrichtung in der Regel einen Sender (Emitter) und einen Empfänger (Sensor) auf.

Damit bei dem erfindungsgemäßen Test-System der Lichtimpuls von der LIDAR-Vorrichtung nicht die simulierten Lichtstrahlen bzw. Lichtimpulse beeinträchtigt, müssen die Lichtimpulse von der LIDAR-Vorrichtung abgefangen werden. Insbesondere dürfen keine Lichtimpulse von der LIDAR-Vorrichtung die Projektionsfläche erreichen oder dort gar reflektiert werden. Die Projektionsfläche selbst wird sich bei dem Testsystem in der Regel relativ dicht (wenige Meter) vor der zu testenden LIDAR-Vorrichtung befinden, während dadurch aber Hindernisse oder Objekte in viel größeren Entfernungen (zum Beispiel bis zu 300 m oder auch mehr) simuliert werden sollen.

Die von der LIDAR-Vorrichtung abgegebenen Lichtimpulse sind dementsprechend abzufangen bzw. abzublenden.

Gleichzeitig ist es für die Funktionsweise des Test-Systems hilfreich, zu detektieren bzw. zu erkennen, dass ein Lichtimpuls von der LIDAR-Vorrichtung abgegeben wurde. Dieses Erkennen kann unmittelbar im Anschluss auslösen, dass die Steuerung mit Hilfe der LIDAR-Bilderzeugungsvorrichtung und der LIDAR-Projektionsvorrichtung einen eigenen Lichtimpuls generiert, um das oben erläuterte künstliche LIDAR-Objekt zu erzeugen.

Der Lichtimpuls des Prüflings (die zu testende LIDAR-Vorrichtung) triggert auf diese Weise den Lichtimpuls des Test-Systems, der nachfolgend durch den Empfänger der LIDAR-Vorrichtung empfangen werden kann.

Durch das Erkennen eines von der zu testenden LIDAR-Vorrichtung abgegebenen Lichtimpulses kann die Erzeugung eines entsprechenden Lichtimpulses durch die LIDAR-Projektionsvorrichtung auslösbar sein. Dabei kann die LIDAR-Detektionsvorrichtung und/oder die Steuerung ausgebildet sein zum Bestimmen eines Orts, bei dem der erkannte Lichtimpuls auf ein reales Objekt aufgetroffen wäre, wobei die Steuerung ausgebildet sein kann, um mit Hilfe der LIDAR-Projektionsvorrichtung einen Infrarotlichtimpuls zu erzeugen, der durch die Projektionsfläche reflektiert wird und durch die zu testende LIDAR-Vorrichtung erkennbar ist, wie wenn es sich um den von der zu testenden LIDAR-Vorrichtung abgegebenen, von dem realen Objekt reflektierten Lichtimpuls handeln würde.

Damit ist die LIDAR-Detektionsvorrichtung und gegebenenfalls auch die Steuerung in der Lage zu erkennen, in welchem Teil der Projektionsfläche ein Lichtimpuls dargestellt werden muss. Wenn das Testszenario an dieser Stelle in der Tat ein künstliches LIDAR-Objekt vorsieht, erzeugt die Steuervorrichtung mit Hilfe der LIDAR-Projektionsvorrichtung einen entsprechenden Lichtimpuls, der von der LIDAR-Vorrichtung empfangen werden kann und daraufhin eine entsprechende Auswertung zulässt.

Es ist somit möglich festzustellen, an welchem Ort der Lichtimpuls auf das Objekt getroffen wäre, wenn er nicht durch die LIDAR-Detektionsvorrichtung vorher abgefangen worden wäre.

Um eine nachträgliche Korrektur der Auslösung des IR-Lichtimpulses zu ermöglichen, kann das Test-System eine Einrichtung zum Nachvollziehen einer kundenspezifischen Signalgenerierung aufweisen. Die Einrichtung ist derart ausgebildet, dass sich die hierfür notwendigen Schlüssel verschlüsselt austauschen lassen. Auf diese Weise muss das Test-System keine direkte Information über die Signalaufbereitung der LIDAR-Vorrichtung aufweisen. Vielmehr wird die Steuerung im Test-System derart eingestellt, dass die Zeitverzögerung des IR-Lichtimpulses (Delay) entsprechend eingestellt wird.

Bei dem erfindungsgemässen Test-System entsprechend dem unabhängigen Anspruch 1 ist eine Video-Bilderzeugungsvorrichtung vorgesehen, zum Erzeugen eines sichtbaren Videobildes von wenigstens einem realen Objekt auf der Projektionsfläche; wobei die Steuerung ausgebildet ist zum Koordinieren des Erzeugens des Videobildes und des Erzeugens des dem LIDAR-Objekt entsprechenden IR-Bildes, derart, dass das Video-Bild und das IR-Bild durch die Steuerung derart überlagert werden, dass in dem daraus resultierenden Gesamt-Bild das dargestellte reale Objekt mit dem LIDAR-Objekt überlagert ist.

Dabei wird dem für den Menschen unsichtbaren IR-Bild, das durch die LIDAR-Projektionsvorrichtung projiziert wird, ein für den Menschen sichtbares Videobild überlagert. Hierbei ist es vorteilhaft, wenn das sichtbare Videobild und das unsichtbare IR-Bild zueinander synchronisiert sind.

Das sichtbare Videobild kann dabei auch insbesondere von einer Kamera empfangen werden, die z.B. in einem zu prüfenden Fahrzeug verbaut ist. Die Kamera kann ggfs. in dem Fahrzeug auch mit der LIDAR-Vorrichtung gekoppelt sein, um Hindernisse, Straßenverhältnisse etc. in der Umgebung des Fahrzeugs zu erkennen.

Wenn das LIDAR-Objekt beispielsweise den oben bereits diskutierten Lkw nachbilden soll, kann das reale Objekt als Videobild einem von hinten gefilmten Lkws entsprechen, dem sich die LIDAR-Vorrichtung (virtuell) annähert.

Die durch die LIDAR-Projektionsvorrichtung erzeugte LIDAR-Information kann dabei präzise und synchron mit dem sichtbaren Videobild überlagert werden.

Es kann eine Ausrichtvorrichtung vorgesehen sein, zum Ausrichten des sichtbaren Video-Bildes und des IR-Bildes sowie der Ausrichtung der Kamera und der LIDAR-Vorrichtung im Testobjekt (z.B. einem zu prüfenden Fahrzeug) mit Hilfe einer sichtbaren Markierung im Video-Bild und einer Markierung in dem IR-Bild.

Dabei liegt es in der Natur der Sache, dass zum effizienten Testen ein präzises Überlagern des Videobildes und des IR-Bildes zweckmäßig ist, wobei diese Ausrichtung nicht ohne weiteres durch einen Bediener vorgenommen werden kann, da er nur das Videobild, nicht aber das IR-Bild mit seinen Augen sehen kann. Zu diesem Zweck ist es möglich, das für den Menschen unsichtbare IR-Bild mit einer für den Menschen sichtbaren Markierung anzureichern. So kann die Ausrichtvorrichtung die entsprechende Markierung mit dem IR-Bild überlagern, so dass das projizierte IR-Bild auch sichtbare Bestandteile aufweist, die als Markierung genutzt und mit dem Videobild in Übereinstimmung gebracht werden können.

Der Ausrichtvorgang kann auf diese Weise auch automatisiert werden.

Die Ausrichtvorrichtung kann eine Markierungsbild-Vorrichtung aufweisen, zum Überlagern des IR-Bildes mit der Markierung, bevor das IR-Bild auf die Projektionsfläche projiziert wird. Auf diese Weise kann - wie oben bereits erläutert - der IR-Lichtstrahl mit einem sichtbaren Lichtstrahl überlagert werden.

Bei einer Variante ist das Test-System geeignet, zusätzlich zu der LIDAR-Vorrichtung auch noch eine Stereo-Kamera zu testen, die z.B. in einem zu prüfenden Fahrzeug verbaut ist, aber auch autark, jedoch in Kombination mit der LIDAR-Vorrichtung vorgesehen sein kann.

Dementsprechend kann eine Stereo-Bildvorrichtung mit zwei miteinander gekoppelten Video-Bilderzeugungsvorrichtungen vorgesehen sein, zum Erzeugen von jeweils einem sichtbaren Video-Bild von wenigstens einem realen Objekt auf der Projektionsfläche, wobei die Video-Bilder jeweils eine Ansicht des realen Objekts darstellen, derart, dass sie durch Zusammenfügen ein Stereo-Bild darstellen, die Steuerung ausgebildet ist zum Koordinieren des Erzeugens der Video-Bilder und des Erzeugens des dem LIDAR-Objekt entsprechenden IR-Bildes, derart, dass die Video-Bilder und das IR-Bild durch die Steuerung derart überlagerbar sind, dass in dem daraus resultierenden Gesamt-Bild das dargestellte reale Objekt mit dem LIDAR-Objekt überlagert ist.

Auf diese Weise ist es möglich, durch das Test-System ein Stereobild zu erzeugen, das durch entsprechende Ansteuerung der vor den jeweiligen Empfängern bzw. Kameras der Stereo-Kamera angeordneten Shutter-Einrichtungen wechselweise den Kameras zugeführt werden kann. Aufgrund der unterschiedlichen Positionen der Kameras, die beispielsweise nebeneinander angeordnet sein können, lässt sich ein dreidimensionales Bild in bekannter Weise rekonstruieren.

Der Aufbau einer derartigen Stereo-Kamera ist an sich bekannt, so dass eine weitergehende Beschreibung an dieser Stelle nicht erforderlich ist.

Bei der hier beschriebenen Variante des erfindungsgemäßen Test-Systems können zwei unterschiedliche, jedoch hinsichtlich des Blickwinkels und der Perspektive aufeinander abgestimmte Video-Bilder von einem realen Objekt generiert werden, um ebenfalls den Stereoeffekt zu erreichen. Das derart ausgebildete Test-System simuliert somit Stereobilder, die von den Kameras der zu testenden Stereo-Kamera durch Ansteuerung der Shutter wechselweise empfangen bzw. aufgenommen werden können.

Das Videobild kann in Ergänzung zu dem oben beschriebenen Testen einer Stereo-LIDAR-Vorrichtung dreidimensional erzeugt werden, z.B. mithilfe der beiden Video-Bilderzeugungsvorrichtungen (Beamer). Auf diese Weise kann zum Beispiel auch eine Stereo-Kamera an einem Fahrzeug getestet werden. Ebenso lässt sich das Zusammenspiel der zu testenden LIDAR-Vorrichtung mit der im Fahrzeug verbauten Stereo-Kamera testen. Während die Stereo-Kamera das sichtbare Videobild auswertet und auf dieser Basis zum Beispiel Objekte erkennt, können durch die zu testende LIDAR-Vorrichtung weitere Informationen (z.B. Abstand, Entfernung, Bewegung, Geschwindigkeit) ermittelt werden.

Mithilfe des oben beschriebenen Test-Systems ist es möglich, eine standardmäßige, handelsübliche bzw. bereits in einem Fahrzeug verbaute und zur Serien- oder Sonderausstattung des Fahrzeugs gehörende LIDAR-Vorrichtung zu testen, ohne dass Veränderungen an der LIDAR-Vorrichtung vorgenommen werden müssen. Insbesondere müssen für die LIDAR-Vorrichtung keine baulichen oder softwaremäßigen Änderungen oder Änderungen an der Steuerung der LIDAR-Vorrichtung vorgenommen werden. Vielmehr ist die LIDAR-Vorrichtung so einsetzbar, wie sie auch im realen Straßenverkehr zum Einsatz kommen würde. Für die LIDAR-Vorrichtung ist das durch das Test-System bereit gestellte künstliche LIDAR-Objekt nicht von einem realen Objekt zu unterscheiden.

Das beschriebene Test-System kann besonders vorteilhaft bei einem Fahrzeugprüfstand zum Prüfen eines Fahrzeugs eingesetzt werden. Dementsprechend wird auch ein Fahrzeugprüfstand zum Prüfen eines Fahrzeugs angegeben, mit einem Test-System entsprechend den obigen Erläuterungen, zum Testen einer an dem Fahrzeug vorhandenen LIDAR-Vorrichtung; und mit einem Prüf-System zum Prüfen des Fahrzeugs.

Fahrzeugprüfstände sind vielfältig bekannt. Sie dienen zum Beispiel zum Prüfen von Antriebssträngen (z.B. als Leistungsprüfstand), Schwingungsverhalten eines Kraftfahrzeugs, Abgastests etc. Dabei müssen die Fahrzeuge vielfältige, oft auch gesetzlich vorgeschriebene Testzyklen absolvieren.

Erfindungsgemäß kann ein an sich bekannter Fahrzeugprüfstand mit einem üblichen Prüf-System durch das oben beschriebene Test-System erweitert werden, um auf diese Weise auch eine an dem Fahrzeug vorhandene LIDAR-Vorrichtung zu testen. Auf diese Weise können bei den im Rahmen von Entwicklungsarbeiten, oft aber auch aufgrund von gesetzlichen Vorschriften durchzuführenden Prüfzyklen gleichzeitig auch Tests für die LIDAR-Vorrichtung am Fahrzeug durchgeführt werden. Eine erhebliche Effizienzsteigerung ist die Folge, weil gleichzeitig mehrere Prüf- bzw. Test-Vorgänge erfolgen können.

Es handelt sich dabei dementsprechend um eine Kombination aus einem oben beschriebenen LIDAR-Prüfstand und einem "klassischen" Fahrzeugprüfstand. Ein komplettes Fahrzeug kann auf diese Weise in einem einzigen Durchgang geprüft werden, einschließlich einer Kombination von LIDAR-Erkennung und Fahrzeugverhalten. Gegebenenfalls kann darüber hinaus auch noch die Bilderkennung durch am Fahrzeug vorhandene Kameras aufgrund der beschriebenen Videoprojektion geprüft werden. Der Fahrzeugprüfstand ist somit in der Lage, vielfältige Funktionen eines als autonom fahrendes Fahrzeug ausgebildeten Prüflings zu prüfen.

Es wird ein Verfahren zum Testen bzw. Prüfen einer LIDAR-Vorrichtung angegeben, mit den Schritten:
- Erkennen eines von der zu testenden LIDAR-Vorrichtung abgegebenen Lichtimpulses;
- Abfangen des Lichtimpulses, bevor er eine in Richtung des Lichtimpulses angeordnete Projektionsfläche erreicht;
- Erzeugen eines künstlichen Antwort-Lichtimpulses, der auf der Basis eines künstlichen LIDAR-Objektes generiert wird, um ein Erkennen des künstlichen LIDAR-Objektes durch die zu testende LIDAR-Vorrichtung zu simulieren;
- Projizieren des Antwort-Lichtimpulses auf die Projektionsfläche und Reflektieren des Antwort-Lichtimpulses von der Projektionsfläche;
- Empfangen des von der Projektionsfläche reflektierten Antwort-Lichtimpulses durch die zu testende LIDAR-Vorrichtung.

Gegebenenfalls kann auch die Richtung des von der LIDAR-Vorrichtung abgegebenen Lichtimpulses bestimmt werden, um die Genauigkeit zu erhöhen.

Das künstliche LIDAR-Objekt dient dabei als virtuelles Test-Objekt, das künstlich erzeugt wird.

Diese und weitere Merkmale und Vorteile werden nachfolgend anhand von Beispielen unter Zuhilfenahme der begleitenden Figuren näher erläutert. Es zeigen:
- **Fig. 1**: eine schematische Darstellung eines Test-Systems zum Testen einer LIDAR-Vorrichtung;
- **Fig. 2**: einen schematischen Aufbau einer LIDAR-Projektionsvorrichtung;
- **Fig. 3**: eine schematische Darstellung zum Erläutern der Arbeitsweise des Test-Systems;
- **Fig. 4**: eine weitere Darstellung zum Erläutern der Arbeitsweise eines Test-Systems;
- **Fig. 5**: einen schematischen Aufbau eines Test-Systems für eine Stereo-Kamera; und
- **Fig. 6**: das Test-System von Fig. 5 in einem anderen Betriebszustand.

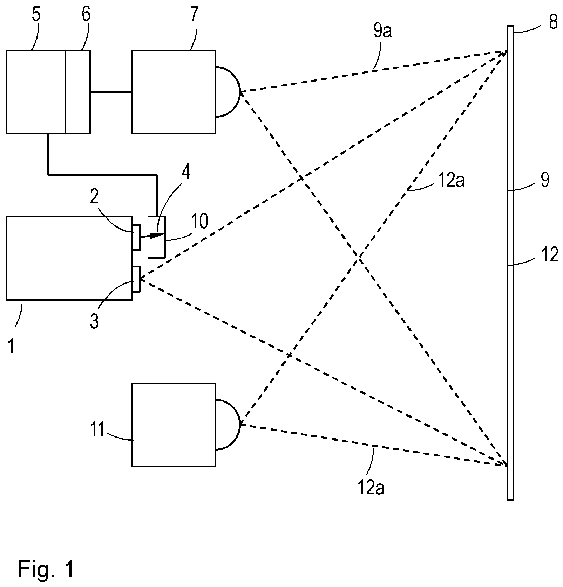

Fig. 1 zeigt ein Test-System zum Testen einer LIDAR-Vorrichtung 1.

Die LIDAR-Vorrichtung 1 ist in bekannter Weise aufgebaut und kann zum Beispiel in einem Fahrzeug eingebaut sein. Sie weist eine Infrarot-Scannereinrichtung (zum Beispiel NIR-Laserscanner oder Solid-State LIDAR) auf, die einen Sender 2 (Emitter) und einen Empfänger 3 (Receiver) umfasst. In dem Test-System kann die als Prüfling dienende LIDAR-Vorrichtung dementsprechend mit dem Fahrzeug, aber auch separat in Alleinstellung geprüft werden.

Das Arbeitsprinzip der LIDAR-Vorrichtung 1 wurde oben bereits erläutert. Insbesondere sendet der Sender 2 einen Infrarot-Lichtpuls 4 aus, der im realen Straßenverkehr durch ein reales Objekt reflektiert und nachfolgend von dem Empfänger 3 empfangen und detektiert werden kann. Selbstverständlich kann der Sender 2 auch eine Vielzahl von Lichtpulsen 4 erzeugen, die eine von der LIDAR-Vorrichtung 1 zu erfassende Fläche abdecken.

Aufgrund der Laufzeit des Lichtpulses 4 bzw. der Vielzahl von Lichtpulsen 4 kann mithilfe des Empfängers 3 ein dreidimensionales Relief der Umgebung der LIDAR-Vorrichtung 1 erfasst werden. Insbesondere erlaubt die Laufzeit der Lichtpulse das Ermitteln einer Entfernungs- bzw. Tiefeninformation, um außer der zum Beispiel auch durch einen Radar erfassbaren Flächeninformation auch die Tiefeninformation als dritte Koordinate ermitteln zu können.

Das Test-System weist eine Steuerung 5 mit einer Bilderzeugungsvorrichtung 6 auf. Die Steuerung 5 dient zum Generieren von LIDAR-Informationen zu einem virtuellen bzw. künstlichen LIDAR-Objekt (Avatar) auf der Basis eines für ein Testszenario nachzubildenden realen Objekts. Zum Beispiel kann es Bestandteil eines Testszenarios sein, einen vorausfahrenden Lkw zu simulieren. Die Steuerung 5 ist in der Lage, aufgrund des vorgegebenen Testszenarios die erforderlichen Daten zu generieren, mit denen der vorausfahrende Lkw nachgebildet wird.

Zu diesen Daten (LIDAR-Informationen) gehören insbesondere eine zweidimensionale Umriss-Information und eine Tiefeninformation zu einer virtuellen Entfernung des künstlichen LIDAR-Objektes. So kann der Lkw zum Beispiel durch eine zweidimensionale rechteckige Fläche als Umrissinformation nachgebildet werden. Zudem kann durch die Steuerung 5 die zugehörige Tiefeninformation generiert werden, mit der die Entfernung des virtuellen Lkws von der zu testenden LIDAR-Vorrichtung 1 simuliert werden soll. Die Tiefeninformation kann sich dabei ändern, um auch eine Bewegung bzw. Geschwindigkeit des LKW simulieren zu können.

Mit Hilfe der Bilderzeugungsvorrichtung 6 ist es möglich, auf der Basis der von der Steuerung 5 generierten LIDAR-Informationen das künstliche LIDAR-Objekt zu erzeugen und als Infrarotbild zu definieren. Die Bilderzeugungsvorrichtung 6 kann dabei integraler Bestandteil der Steuerung 5 sein.

Die Steuerung 5 bzw. die Bilderzeugungsvorrichtung 6 steuern eine LIDAR-Projektionsvorrichtung 7 an, mit der das erzeugte künstliche LIDAR-Objekt auf eine Projektionsfläche 8 projiziert werden kann.

Bei der Projektionsvorrichtung 7 kann es sich insbesondere um einen Infrarotlaser oder eine Infrarot-LED handeln, der Infrarotlicht 9a (z.B. als IR-Lichtimpuls oder als Vielzahl von IR-Lichtimpulsen) erzeugt und das künstliche LIDAR-Objekt in Form eines (unsichtbaren) Infrarotbildes 9 (IR-Bild) auf die Projektionsfläche 8 projiziert.

Die zu testende LIDAR-Vorrichtung 1 ist vor der Projektionsfläche 8 positioniert und in der Lage, über seinen Empfänger 3 das Infrarotbild 9 von der Projektionsfläche 8 zu empfangen.

Dabei ist es erforderlich, dass alle Infrarot-Lichtimpulse 4, die von dem Sender 2 der LIDAR-Vorrichtung 1 abgegeben werden, abgefangen werden. Zu diesem Zweck ist vor dem Sender 2 eine Detektionsvorrichtung 10 angeordnet, die alle Lichtimpulse 4 abfängt und insbesondere verhindert, dass die Lichtimpulse 4 die Projektionsfläche 8 erreichen können und nachfolgend von dem Empfänger 3 erkannt werden können.

Zudem kann bei einer Variante die Detektionsvorrichtung 10 unterschiedlich ausgebildet sein, um den jeweiligen Lichtimpuls und ggfs. seine Richtung zu erkennen. Auf diese Weise kann durch eine Kopplung der Detektionsvorrichtung 10 mit der Steuerung 5 die Erzeugung eines Lichtimpulses durch die Projektionsvorrichtung 7 ausgelöst werden. Der von dem Sender 2 abgegebene Lichtimpuls 4 dient somit als Trigger für die Erzeugung eines Lichtimpulses durch die Projektionsvorrichtung 7.

Durch entsprechende Koordination wird der von der Projektionsvorrichtung 7 erzeugte Lichtimpuls in die Richtung abgegeben, in der auch der jeweils aktuelle Lichtimpuls 4 von dem Sender 2 auf ein gedachtes (virtuelles) Objekt auftreten würde.

Da beispielsweise ein Lichtimpuls, der in einer realen Situation von dem Sender 2 bis zu einem in 60 m entfernten Lkw auftreffen und wieder reflektiert würde, 120 m zurückzulegen hätte, würde eine entsprechende Zeit verstreichen, bis der reflektierte Lichtimpuls wieder vom Empfänger 3 empfangen werden könnte. Diese Verzögerung wird von der Steuerung 5 berücksichtigt, die erst mit entsprechender Verzögerung den Lichtimpuls durch die Projektionsvorrichtung 7 generiert.

Auf diese Weise kann ein flächiges Infrarotbild 9 erzeugt werden.

In dem Test-System werden somit die Licht- oder Laserimpulse, die normalerweise durch die im Fahrzeug verbaute LIDAR-Vorrichtung gesendet wird, durch ein künstliches LIDAR-Signal ersetzt. Die Steuerung 5 erzeugt dabei ein virtuelles Test-Objekt auf der Projektionsfläche 8, das hinsichtlich der Parameter Entfernung, Größe und gegebenenfalls auch Bewegung (Geschwindigkeit) in Echtzeit erzeugt wird und durch den Empfänger (LIDAR-Sensor) empfangen werden kann.

Für das Verarbeiten der Information, dass ein Lichtpuls 4 durch die Detektionsvorrichtung 10 erfasst wurde und dadurch ein entsprechender InfrarotLichtimpuls 9a durch die Projektionsvorrichtung 7 erzeugt werden soll, ist eine gewisse Bearbeitungszeit erforderlich. Diese Bearbeitungszeit sollte naturgemäß sehr kurz gehalten werden, um mögliche Messfehler zu minimieren. Sie liegt zum Beispiel in einem Bereich unterhalb von 20 ns (z.B. bei ungefähr 10 ns, je nach Ausgestaltung der Komponenten). Diese Verzögerung kann zu einer Abweichung der Entfernungsmessung führen. Der entsprechende Fehler kann zum Beispiel bei einer Bearbeitungszeit von 10 ns bei 3 m liegen. Dementsprechend kann die durch die LIDAR-Vorrichtung gemessene Entfernung des virtuellen Test-Objekts nachfolgend noch unter Berücksichtigung der Bearbeitungszeit korrigiert werden.

Um eine nachträgliche Korrektur zu ermöglichen, kann das Test-System eine Einrichtung zum Nachvollziehen einer kundenspezifischen Signalgenerierung aufweisen. Die Einrichtung ist derart ausgebildet, dass sich die hierfür notwendigen Schlüssel verschlüsselt austauschen lassen. Auf diese Weise muss das Test-System keine direkte Information über die Signalaufbereitung der LIDAR-Vorrichtung aufweisen.

Zusätzlich zu der Infrarot- bzw. LIDAR-Projektionsvorrichtung 7 ist ein als Video-Bilderzeugungsvorrichtung dienender Video-Beamer 11 vorgesehen, der auf die gleiche Fläche, auf der das Infrarotbild 9 projiziert ist, mithilfe von sichtbarem Licht 12a ein sichtbares Videobild 12 auf die Projektionsfläche 8 projiziert. Das Videobild 12 kann ebenfalls künstlich generiert sein, aber reale Fahrsituationen in den verschiedenen Testszenarien abbilden.

So kann der bereits mehrfach diskutierte Lkw in Form des Videobilds 12 auch für die in einem Fahrzeug verbaute Kamera sowie für einen Bediener sichtbar gemacht werden, während das Infrarotbild 9 prinzipbedingt unsichtbar für den Menschen ist.

Der Video-Beamer 11 kann direkt auch durch die Steuerung 5 angesteuert werden, um die Erzeugung des sichtbaren Video-Bildes 12 und die Erzeugung des Infrarotbildes 9 zu koordinieren.

Ebenso ist es möglich, dass die Projektionsvorrichtung 7 und der Video-Beamer 11 in einer gemeinsamen Vorrichtung integriert sind, so dass diese Vorrichtung gleichermaßen das Infrarotbild 9 und das sichtbare Video-Bild 12 erzeugt.

Die Steuerung 5 kann dazu ausgebildet sein, um auch komplexere Test-Szenarien zu verwirklichen und zu simulieren. Dementsprechend kann die Steuerung 5 in Echtzeit Daten generieren, die neben reinen Bilddaten auch Objektdaten (z.B. entsprechend verschiedene Objektklassen, wie "Fahrzeuge", "Menschen", "Verkehrszeichen", "Bäume" etc.) enthalten. Diese Objektliste kann entsprechend der gewählten Testszenarien automatisch generiert werden. Ebenso kann sie auch für Testzwecke durch einen Bediener des Test-Systems von außen beeinflusst werden.

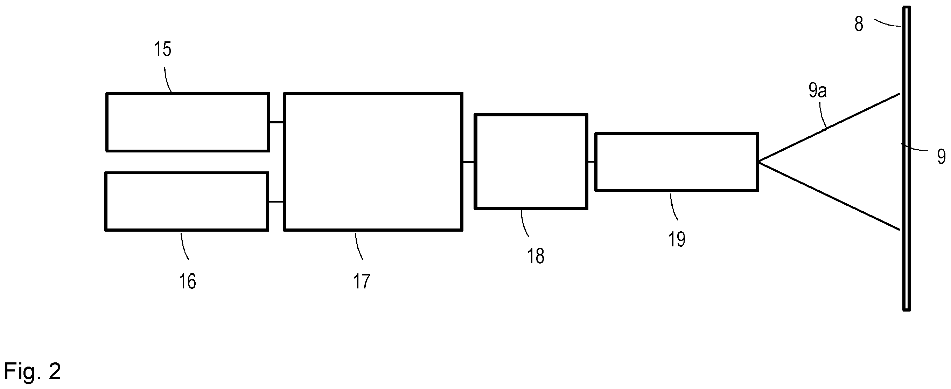

Fig. 2 zeigt die LIDAR-Projektionsvorrichtung 7 in größerem Detail.

Sie weist eine NIR-Lichtquelle 15 (Nahes Infrarot) und eine Lichtquelle 16 für sichtbares Licht auf. Die beiden Lichtquellen 15, 16 sind jeweils von der Steuerung 5 ansteuerbar. Die Lichtstrahlen der beiden Lichtquellen 15, 16 werden in einer optischen Kombinationseinrichtung 17 miteinander optisch kombiniert bzw. überlagert. Dazu können zum Beispiel in geeigneter Weise halbdurchlässige Spiegel o.ä. verwendet werden. Das Ergebnis ist ein kombinierter Lichtstrahl aus sichtbarem Licht von der Lichtquelle 16 und Infrarotlicht von der NIR-Lichtquelle 15.

Das sichtbare Licht von der Lichtquelle 16 kann dabei insbesondere genutzt werden, um eine sichtbare Markierung auf der Projektionsfläche 8 zu erzeugen. Anhand dieser Markierung kann ein Bediener zum Beispiel das Infrarotbild 9 und das Videobild 12 auf der Projektionsfläche 8 in Übereinstimmung bringen (vgl. Fig. 1).

Zum Beispiel kann die Lichtquelle 16 sichtbares Licht in Form eines geeigneten Markierungsbildes mit Punkten oder Kreuzen erzeugen, die bedarfsweise auf der Projektionsfläche 8 erzeugt werden.

An die Lichtstrahl-Kombinationseinrichtung 17 anschließend ist eine Bildeinrichtung 18 angeordnet. Die ebenfalls von der Steuerung 5 bzw. der Bilderzeugungsvorrichtung 6 ansteuerbare Bildeinrichtung 18 kann zum Beispiel durch eine DMD-Einrichtung (Digital Mirror Device), eine LCD-Einrichtung (Liquid Crystal Display) oder eine DBD-Einrichtung (Direct Beam Distribution) gebildet werden. Mit Hilfe der Bildeinrichtung 18 wird ein Infrarotlichtmuster erzeugt, das nachfolgend mit Hilfe einer Projektionsoptik 19 auf die Projektionsfläche 8 projiziert wird und dort das Infrarotbild 9 erzeugt.

Bei dem Infrarotlicht handelt es sich insbesondere um gepulstes Licht, wobei die Tiefeninformation (dritte Koordinate) durch die Verzögerung der Lichtpulse von der NIR-Lichtquelle 15 erreicht wird, während die Bildeinrichtung 18 im Wesentlichen die zweidimensionalen Umrissinformationen (Position, Größe etc.) definiert.

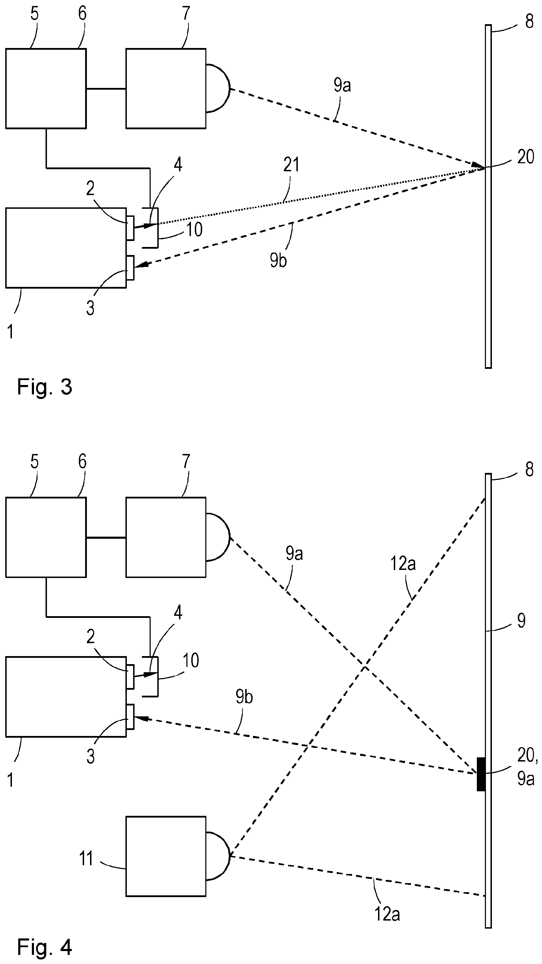

Fig. 3 zeigt beispielhaft das Zusammenwirken zwischen der zu testenden LIDAR-Vorrichtung 1 und dem Test-System im Detail.

Demnach gibt der Sender 2 der LIDAR-Vorrichtung 1 den Infrarot-Lichtpuls 4 ab, der durch die Detektionsvorrichtung 10 abgeschirmt wird.

Die Detektionsvorrichtung 10 erkennt, dass ein Lichtpuls 4 abgegeben wurde und triggert auf diese Weise die Erzeugung eines entsprechenden Infrarotlichtpulses 9a durch die Projektionsvorrichtung 7 mit Hilfe der Steuerung 5 bzw. der Bilderzeugungsvorrichtung 6.

Der Infrarotlichtpuls 9a wird auf einem Ort 20 auf der Projektionsfläche 8 projiziert, der dem Ort 20 entspricht, auf den der Lichtpuls 4 auftreffen würde, wenn er nicht durch die Detektionsvorrichtung 10 abgeschirmt worden wäre. Die entsprechende Richtung des Infrarotlichtpulses 4 wird durch eine virtuelle Linie 21 symbolisiert.

Dementsprechend trifft der erzeugte Infrarotlichtpuls 9a auf den Ort 20 auf und wird von dort als Infrarotlichtstrahl 9b reflektiert, so dass er durch den Empfänger 3 der LIDAR-Vorrichtung 1 detektiert werden kann.

Die zeitliche Abfolge ist demnach folgendermaßen: Aussenden eines InfrarotLichtpulses 4 durch den Sender 2 - Detektieren des Lichtpulses 4 durch die Detektionsvorrichtung 10 - Triggern eines entsprechenden Infrarot-Lichtpulses 9a durch Aktivieren der Projektionsvorrichtung 7 über die Steuerung 5 - Projizieren des Infrarot-Lichtpulses 9a auf die Projektionsfläche 8 - Empfangen des von der Projektionsfläche 8 reflektierten Infrarot-Lichtstrahls 9b durch den Empfänger 3 - Bestimmen der Zeit zwischen dem Senden durch den Sender 2 und dem Empfangen durch den Empfänger 3 - gegebenenfalls Bestimmen der (virtuellen) Entfernung des am Ort 20 erzeugten künstlichen LIDAR-Objektes (virtuelles TestObjekt).

Fig. 4 zeigt eine ähnliche Situation wie Fig. 3, wobei zusätzlich der Video-Beamer 11 vorhanden ist, der das sichtbare Licht 12a auf die Projektionsfläche 8 projiziert und dadurch das Video-Bild 12 erzeugt.

So kann zum Beispiel an dem Ort 20 die bereits diskutierte Rückansicht eines vorausfahrenden Lkws mit dem sichtbaren Licht 12a abgebildet werden. Gleichzeitig kann mit Hilfe der Projektionsvorrichtung 7 ein Infrarot-Lichtpuls 9a auf den Ort 20 (hier: die Rückseite des abgebildeten Lkws) projiziert werden, der von dem Empfänger 3 detektiert wird.

Die LIDAR-Vorrichtung 1 ist dabei entsprechend ihrer bestimmungsgemäßen Funktion in der Lage, die Zeit zwischen dem Aussenden eines Lichtpulses durch den Sender 2 und dem Empfang des Infrarotlichtpulses 9a durch den Empfänger 3 zu messen und daraus die (virtuelle) Entfernung des (virtuellen) Objekts, das am Ort 20 erzeugt wird, zu bestimmen.

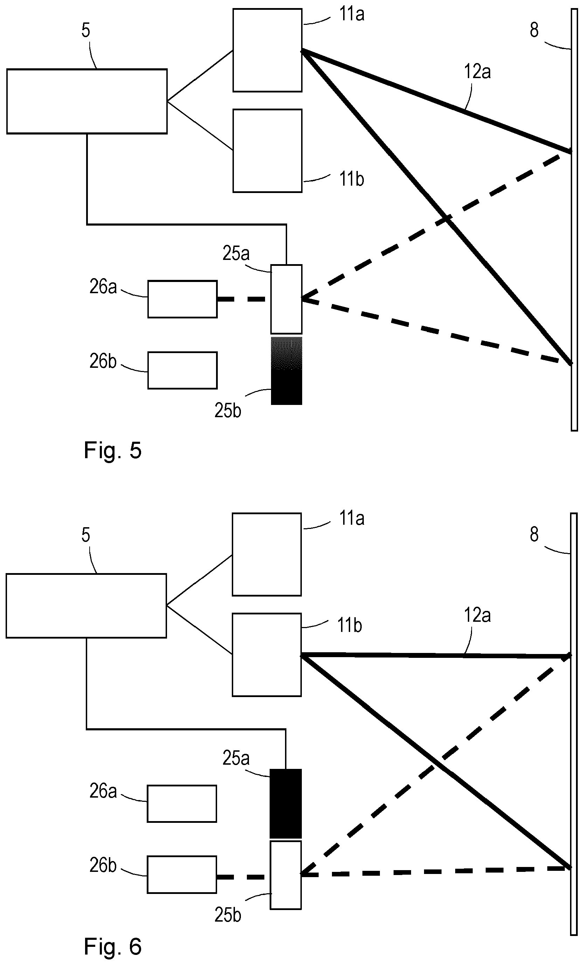

Die Fig. 5 und 6 zeigen den Aufbau des Test-Systems als Stereo-Test-System zum Testen einer Stereo-Kamera-Vorrichtung.

Die oben bereits im Einzelnen erläuterten Vorrichtungen der LIDAR-Vorrichtung werden in den Figuren nicht mehr gezeigt, so dass lediglich die Unterschiede bzw. Ergänzungen erläutert werden.

Dementsprechend weist die zu prüfende Stereo-Kamera-Vorrichtung zwei Empfänger bzw. Kameras 26a, 26b (z.B. eine Stereo-Kamera in einem Testfahrzeug) auf. Vor jeder der Kameras 26a, 26b ist ein jeweiliger Shutter 25a, 25b angeordnet.

Der Video-Beamer 11 ist in Form von zwei getrennten Projektionsvorrichtungen 11a und 11b verwirklicht, die wechselweise entsprechende Bildinformation als sichtbares Licht 12a erzeugen. Dabei die Bildinformation von der Projektionsvorrichtung 11a dazu gedacht, von der Kamera 26a empfangen zu werden. Dementsprechend ist in diesem Fall (Fig. 5) der Shutter 25a geöffnet, während der Shutter 25b geschlossen ist.

Im anderen Fall wird die Projektionsvorrichtung 11b aktiviert, deren Bildinformation als sichtbares Licht 12a durch die Kamera 26b empfangen werden soll. Dementsprechend ist in diesem Zustand (Fig. 6) der Shutter 25a vor der Kamera 26a geschlossen, während der Shutter 25b vor der Kamera 26b geöffnet ist, so dass der von der Projektionsfläche 8 reflektierte Lichtstrahl zu der Kamera 26b gelangen kann.

Zum Synchronisieren des Zusammenspiels zwischen den Projektionsvorrichtungen 11a, 11b, den Kameras 26a, 26b (der zu testenden Stereo-Kamera) und den jeweils zugeordneten Shuttern 25a, 25b weist die Steuerung 5 eine Synchronisationseinrichtung auf, die den Wechsel mit hoher Frequenz gewährleistet. Je nach Ausgestaltung können die Wechsel mit einer geeigneten Frequenz von 10 Hz oder mehr vollzogen werden.

Im Ergebnis kann ein Stereobild durch die zu testende Stereo-Kamera detektiert werden, die dann zusätzlich zu den Laufzeiten der IR-Lichtpulse weitere Informationen ermitteln und bereitstellen kann. Diese Ausgestaltung befähigt das TestSystem, auch eine im Testobjekt (Fahrzeug) eingebaute Sensorfusion testen zu können.

Zur Erläuterung wird in der obigen Beschreibung meist von einem Lichtimpuls gesprochen. Tatsächlich basiert aber die Funktion einer LIDAR-Vorrichtung auf dem Aussenden von sehr vielen Lichtimpulsen, die schließlich ein flächiges Infrarot-Bild erzeugen, z.B. als Punktwolke. Dementsprechend ist auch das Test-

System in der Lage, mit Hilfe der Projektionsvorrichtung 7 viele Lichtimpulse in hoher Geschwindigkeit zu senden, um ein entsprechendes Infrarot-Bild auf der Projektionsfläche 8 zu erzeugen, das durch den Empfänger 3 detektiert werden kann.

## Patentansprüche

1. Test-System zum Testen einer LIDAR-Vorrichtung (1), mit
- einer Steuerung (5) zum Generieren von LIDAR-Informationen zu einem künstlichen LIDAR-Objekt auf der Basis eines für einen Testvorgang nachzubildenden realen Objekts, wobei die LIDAR-Informationen wenigstens eine zweidimensionale Umriss-Information und eine Tiefeninformation zu einer virtuellen Entfernung des künstlichen LIDAR-Objektes umfassen;
- einer LIDAR-Bilderzeugungsvorrichtung (6) zum Erzeugen des künstlichen LIDAR-Objektes auf der Basis der LIDAR-Informationen; und mit
- einer LIDAR-Projektionsvorrichtung (7);
**dadurch gekennzeichnet, dass**
- die LIDAR-Projektionsvorrichtung ausgebildet ist zum Projizieren des künstlichen LIDAR-Objektes (9) auf eine Projektionsfläche (8);
- eine Video-Bilderzeugungsvorrichtung (11) vorgesehen ist, zum Erzeugen eines sichtbaren Video-Bildes (12) von wenigstens einem realen Objekt auf der Projektionsfläche (8); und
- die Steuerung (5) ausgebildet ist zum Koordinieren des Erzeugens des Video-Bildes (12) und des Erzeugens eines dem künstlichen LIDAR-Objekt entsprechenden IR-Bildes (9), derart, dass das Video-Bild (12) und das IR-Bild (9) durch die Steuerung (5) derart überlagert werden, dass in dem daraus resultierenden Gesamt-Bild das dargestellte reale Objekt mit dem LIDAR-Objekt überlagert ist.

2. Test-System nach Anspruch 1, wobei die Tiefeninformation bestimmt wird aufgrund
- einer tatsächlichen Entfernung zwischen der Projektionsfläche (8) und der zu testenden LIDAR-Vorrichtung (1); und aufgrund
- einer virtuellen Entfernung des künstlichen LIDAR-Objektes.

3. Test-System nach einem der vorstehenden Ansprüche, wobei die LIDAR-Projektionsvorrichtung (7) eine IR-Laservorrichtung (15) aufweist, zum Projizieren des künstlichen LIDAR-Objektes als Infrarotbild (9) auf der Projektionsfläche (8).

4. Test-System nach einem der vorstehenden Ansprüche, wobei
- eine LIDAR-Detektionsvorrichtung (10) vorgesehen ist, zum Abfangen und Erkennen von einem von der zu testenden LIDAR-Vorrichtung (1) abgegebenen Lichtstrahl (4); und wobei
- das Abfangen des Lichtstrahls (4) erfolgt, bevor er die Projektionsfläche (8) erreicht.

5. Test-System nach einem der vorstehenden Ansprüche, wobei durch das Erkennen eines von der zu testenden LIDAR-Vorrichtung (1) abgegebenen Lichtstrahls (4) die Erzeugung eines entsprechenden Lichtstrahls (9a) durch die LIDAR-Projektionsvorrichtung (7) ausgelöst wird.

6. Test-System nach Anspruch 4 oder nach den Ansprüchen 4 und 5, wobei
- die LIDAR-Detektionsvorrichtung (10) und/oder die Steuerung (5) ausgebildet sind zum Bestimmen eines Orts (20), bei dem der erkannte Lichtstrahl auf ein reales Objekt aufgetroffen wäre; und wobei
- die Steuerung (5) ausgebildet ist, um mithilfe der LIDAR-Projektionsvorrichtung (7) einen Infrarot-Lichtpuls (9a) zu erzeugen, der durch die Projektionsfläche (8) reflektiert wird und durch die zu testende LIDAR-Vorrichtung (1) erkannt wird, wie wenn es sich um den von der zu testenden LIDAR-Vorrichtung (1) abgegebenen, von dem realen Objekt reflektierten Lichtstrahl handeln würde.

7. Test-System nach einem der vorstehenden Ansprüche, wobei eine Ausrichtvorrichtung vorgesehen ist, zum Ausrichten des sichtbaren Video-Bildes (12) und des IR-Bildes (9) mithilfe einer sichtbaren Markierung in dem IR-Bild (9).

8. Test-System nach Anspruch 7, wobei die Ausrichtvorrichtung eine Markierungsbild-Vorrichtung (16) aufweist, zum Überlagern des IR-Bildes (9) mit der Markierung, bevor das IR-Bild (9) auf die Projektionsfläche (8) projiziert wird.

9. Test-System nach einem der vorstehenden Ansprüche, wobei
- eine Stereo-Bildvorrichtung mit zwei miteinander gekoppelten Video-Bilderzeugungsvorrichtungen (11a, 11b) vorgesehen ist, zum Erzeugen von jeweils einem sichtbaren Video-Bild (12) von wenigstens einem realen Objekt auf der Projektionsfläche (8);
- die Video-Bilder (12) jeweils eine Ansicht des realen Objekts darstellen, derart, dass sie durch Zusammenfügen ein Stereo-Bild darstellen;
- die Steuerung (5) ausgebildet ist zum Koordinieren des Erzeugens der Video-Bilder (12) und des Erzeugens des dem künstlichen LIDAR-Objekt entsprechenden IR-Bildes (9), derart, dass die Video-Bilder (12) und das IR-Bild (9) durch die Steuerung (5) derart überlagert werden, dass in dem daraus resultierenden Gesamt-Bild das dargestellte reale Objekt mit dem LIDAR-Objekt überlagert ist.

10. Test-System nach Anspruch 9, wobei das Test-System zum Testen einer Stereo-Kamera-Vorrichtung mit zwei Kameras (26a, 26b) ausgebildet ist, wobei
- zwei Shutter-Einrichtungen (25a, 25b), die den jeweiligen Kameras (26a, 26b) an der zu testenden Stereo-Kamera-Vorrichtung zugeordnet sind und durch die bedarfsweise ein Lichteinfall an den zugeordneten Kameras (26a, 26b) blockiert oder freigegeben wird; und wobei
- die Steuerung (5) eine Synchronisationseinrichtung aufweist, zum Synchronisieren der beiden in der Stereo-Bildvorrichtung vorgesehenen Video-Bilderzeugungsvorrichtungen (11a, 11b) mit den Shutter-Einrichtungen (25a, 25b) derart, dass wechselweise eine Ansicht des realen Objekts von einer der beiden Kameras (26a, 26b) wahrgenommen werden kann.

11. Fahrzeugprüfstand zum Prüfen eines Fahrzeugs, mit
- einem Test-System nach einem der vorstehenden Ansprüche zum Testen einer an dem Fahrzeug vorhandenen LIDAR-Vorrichtung (1); und mit
- einem Prüf-System zum Prüfen des Fahrzeugs;
wobei
- das Prüf-System ausgewählt ist aus der Gruppe Prüfsystem für Antriebsstränge von Fahrzeugen, Leistungsprüfsystem, Schwingungsprüfsystem, Abgasprüfsystem.

12. Verfahren zum Testen einer LIDAR-Vorrichtung (1), mit den Schritten
- Erkennen eines von der zu testenden LIDAR-Vorrichtung (1) abgegebenen Lichtimpulses (4);
- Abfangen des Lichtimpulses (4), bevor er eine in Richtung des Lichtimpulses (4) angeordnete Projektionsfläche (8) erreicht;
- Erzeugen eines künstlichen Antwort-Lichtimpulses (9a, 9b), der auf der Basis eines künstlichen LIDAR-Objektes generiert wird, um ein Erkennen des künstlichen LIDAR-Objektes durch die zu testende LIDAR-Vorrichtung (1) zu simulieren, wobei das künstliche LIDAR-Objekt auf LIDAR-Informationen basiert, die auf der Basis eines für einen Testvorgang nachzubildenden realen Objekts generiert wurden, wobei die LIDAR-Informationen wenigstens eine zweidimensionale Umriss-Information und eine Tiefeninformation zu einer virtuellen Entfernung des künstlichen LIDAR-Objektes umfassen;
- Projizieren des Antwort-Lichtimpulses (9a) auf die Projektionsfläche (8) und Reflektieren des Antwort-Lichtimpulses (9b) von der Projektionsfläche (8);
- Empfangen des von der Projektionsfläche (8) reflektierten Antwort-Lichtimpulses (9b) durch die zu testende LIDAR-Vorrichtung (1);
- Erzeugen eines sichtbaren Video-Bildes (12) von wenigstens einem realen Objekt auf der Projektionsfläche (8); und
- Koordinieren des Erzeugens des Video-Bildes (12) und des Erzeugens eines dem künstlichen LIDAR-Objekt entsprechenden IR-Bildes (9), derart, dass das Video-Bild (12) und das IR-Bild (9) durch die Steuerung (5) derart überlagert werden, dass in dem daraus resultierenden Gesamt-Bild das dargestellte reale Objekt mit dem LIDAR-Objekt überlagert ist.

## Claims

1. A test system for testing a LIDAR device (1), comprising
- a controller (5) for generating LIDAR information regarding an artificial LIDAR object based on a real object to be simulated for a test operation, wherein the LIDAR information comprises at least one piece of two-dimensional outline in-formation and one piece of depth information regarding a virtual distance of the artificial LIDAR object;
- a LIDAR image generation device (6) for generating the artificial LIDAR object based on the LIDAR information; and comprising
- a LIDAR projection device (7);
**characterized in that**
- the LIDAR projection device is configured to project the artificial LIDAR object (9) onto a projection surface (8);
- a video image generation device (11) is provided for generating a visible video image (12) of at least one real object on the projection surface (8); and
- the controller (5) is configured to coordinate the generation of the video image (12) and the generation of an IR image (9) corresponding to the artificial LIDAR object in such a manner that the video image (12) and the IR image (9) are superimposed by the controller (5) in such a manner that, in the resulting overall image, the displayed real object is superimposed on the LIDAR object.

2. The test system according to claim 1, wherein the depth information is determined based on
- an actual distance between the projection surface (8) and the LIDAR device (1) to be tested; and based on
- a virtual distance of the artificial LIDAR object.

3. The test system according to any one of the preceding claims, wherein the LIDAR projection device (7) includes an IR laser device (15), for projecting the artificial LIDAR object as an infrared image (9) onto the projection surface (8).

4. The test system according to any one of the preceding claims, wherein
- a LIDAR detection device (10) is provided for intercepting and detecting a light beam (4) emitted by the LIDAR device (1) to be tested; and wherein
- the light beam (4) is intercepted before it reaches the projection surface (8).

5. The test system according to any one of the preceding claims, wherein the detection of a light beam (4) emitted by the LIDAR device (1) to be tested triggers the generation of a corresponding light beam (9a) by the LIDAR projection device (7).

6. The test system according to claim 4 or according to claims 4 and 5, wherein
- the LIDAR detection device (10) and/or the controller (5) are configured to determine a location (20) at which the detected light beam would have struck a real object; and wherein
- the controller (5) is configured to generate, with the aid of the LIDAR projection device (7), an infrared light pulse (9a) which is reflected by the projection surface (8) and is detected by the LIDAR device (1) to be tested as if it were the light beam emitted by the LIDAR device (1) to be tested and reflected by the real object.

7. The test system according to any one of the preceding claims, wherein an alignment device is provided for aligning the visible video image (12) and the IR image (9) with the aid of a visible marker in the IR image (9).

8. The test system according to claim 7, wherein the alignment device includes a marker image device (16) for superimposing the marker on the IR image (9) before the IR image (9) is projected onto the projection surface (8).

9. The test system according to any one of the preceding claims, wherein
- a stereo image device comprising two video image generation devices (11a, 11b) coupled to one another is provided for generating a visible video image (12) of at least one real object on the projection surface (8);
- the video images (12) each represent a view of the real object in such a manner that they represent a stereo image by merging them;
- the controller (5) is configured to coordinate the generation of the video images (12) and the generation of the IR image (9) corresponding to the artificial LIDAR object in such a manner that the video images (12) and the IR image (9) are superimposed by the controller (5) in such a manner that, in the resulting overall image, the displayed real object is superimposed on the LIDAR object.

10. The test system according to claim 9, wherein the test system is configured to test a stereo camera device with two cameras (26a, 26b), wherein
- two shutter mechanisms (25a, 25b) which are assigned to the respective cameras (26a, 26b) on the stereo camera device to be tested and by means of which an incidence of light on the assigned cameras (26a, 26b) is blocked or unblocked as required; and wherein
- the controller (5) includes a synchronization mechanism for synchronizing the two video image generation devices (11a, 11b) provided in the stereo image device with the shutter mechanisms (25a, 25b) in such a manner that a view of the real object can be alternately detected by one of the two cameras (26a, 26b).

11. A vehicle test bench for testing a vehicle, comprising
- a test system according to any one of the preceding claims for testing a LIDAR device (1) present on the vehicle; and comprising
- a test system for testing the vehicle;
wherein
- the test system is selected from the group of vehicle power train test system, performance test system, vibration test system, exhaust test system.

12. A method for testing a LIDAR device (1), comprising the steps of
- detecting a light pulse (4) emitted by the LIDAR device (1) to be tested;
- intercepting the light pulse (4) before it reaches a projection surface (8) arranged in the direction of the light pulse (4);
- generating an artificial response light pulse (9a, 9b) generated based on an artificial LIDAR object to simulate detection of the artificial LIDAR object by the LIDAR device (1) to be tested, wherein the artificial LIDAR object is based on LIDAR information that has been generated based on a real object to be simulated for a test operation, wherein the LIDAR information comprises at least one piece of two-dimensional outline information and one piece of depth information regarding a virtual distance of the artificial LIDAR object;
- projecting the response light pulse (9a) onto the projection surface (8) and reflecting the response light pulse (9b) from the projection surface (8);
- receiving the response light pulse (9b) reflected from the projection surface (8) by the LIDAR device (1) to be tested;
- generating a visible video image (12) of at least one real object on the projection surface (8); and
- coordinating the generation of the video image (12) and the generation of an IR image (9) corresponding to the artificial LIDAR object in such a manner that the video image (12) and the IR image (9) are superimposed by the controller (5) in such a manner that, in the resulting overall image, the displayed real object is superimposed on the LIDAR object.

## Revendications

1. Système de test pour tester un dispositif LIDAR (1), comprenant
- une commande (5) pour générer des informations LIDAR sur un objet LIDAR artificiel sur la base d'un objet réel à reproduire pour un processus de test, dans lequel les informations LIDAR comprennent au moins une information de contour bidimensionnelle et une information de profondeur sur un éloignement virtuel de l'objet LIDAR artificiel ;
- un dispositif de génération d'image LIDAR (6) pour générer l'objet LIDAR artificiel sur la base des informations LIDAR ; et comprenant
- un dispositif de projection LIDAR (7) ;
**caractérisé en ce que**
- le dispositif de projection LIDAR est réalisé pour projeter l'objet LIDAR (9) artificiel sur une surface de projection (8) ;
- un dispositif de génération d'image vidéo (11) est prévu pour générer une image vidéo visible (12) d'au moins un objet réel sur la surface de projection (8) ; et
- la commande (5) est réalisée pour coordonner la génération de l'image vidéo (12) et la génération d'une image IR (9) correspondant à l'objet LIDAR artificiel de telle manière que l'image vidéo (12) et l'image IR (9) soient superposées par la commande (5) de telle manière que dans l'image globale en résultant, l'objet réel représenté soit superposé avec l'objet LIDAR.

2. Système de test selon la revendication 1, dans lequel l'information de profondeur est déterminée sur la base de
- un éloignement effectif entre la surface de projection (8) et le dispositif LIDAR (1) à tester ; et sur la base de
- un éloignement virtuel de l'objet LIDAR artificiel.

3. Système de test selon l'une des revendications précédentes, dans lequel le dispositif de projection LIDAR (7) présente un dispositif laser IR (15) pour projeter l'objet LIDAR artificiel en tant qu'image infrarouge (9) sur la surface de projection (8).

4. Système de test selon l'une des revendications précédentes, dans lequel
- un dispositif de détection LIDAR (10) est prévu pour intercepter et reconnaître un faisceau de lumière (4) émis par le dispositif LIDAR (1) à tester ; et dans lequel
- l'interception du faisceau laser (4) est effectuée avant qu'il atteigne la surface de projection (8).

5. Système de test selon l'une des revendications précédentes, dans lequel la génération d'un faisceau de lumière (9a) correspondant est déclenchée par le dispositif de projection LIDAR (7) par la reconnaissance d'un faisceau de lumière (4) émis par le dispositif LIDAR (1) à tester.

6. Système de test selon la revendication 4 ou selon les revendications 4 et 5, dans lequel
- le dispositif de détection LIDAR (10) et/ou la commande (5) sont réalisés pour déterminer un lieu (20) pour lequel le faisceau de lumière reconnu serait projeté sur un objet réel ; et dans lequel
- la commande (5) est réalisée afin de générer à l'aide du dispositif de projection LIDAR (7) une impulsion de lumière à infrarouge (9a) qui est réfléchie par la surface de projection (8) et est reconnue par le dispositif LIDAR (1) à tester comme s'il s'agissait du faisceau de lumière réfléchi par l'objet réel émis par le dispositif LIDAR (1) à tester.

7. Système de test selon l'une des revendications précédentes, dans lequel un dispositif d'orientation est prévu pour orienter l'image vidéo visible (12) et l'image IR (9) à l'aide d'un marquage visible dans l'image IR (9).

8. Système de test selon la revendication 7, dans lequel le dispositif d'orientation présente un dispositif d'image de marquage (16) pour superposer l'image IR (9) avec le marquage avant que l'image IR (9) soit projetée sur la surface de projection (8).

9. Système de test selon l'une des revendications précédentes, dans lequel
- un dispositif d'image stéréo comprenant deux dispositifs de génération d'image vidéo (11a, 11b) couplés l'un à l'autre est prévu pour générer à chaque fois une image vidéo visible (12) d'au moins un objet réel sur la surface de projection (8);
- les images vidéo (12) représentent chacune une vue de l'objet réel de telle manière qu'elles représentent par assemblage une image stéréo ;
- la commande (5) est réalisée pour coordonner la génération des images vidéo (12) et la génération de l'image IR (9) correspondant à l'objet LIDAR artificiel de telle manière que les images vidéo (12) et l'image IR (9) soient superposées par la commande (5) de telle manière que dans l'image globale en résultant, l'objet réel représenté soit superposé avec l'objet LIDAR.

10. Système de test selon la revendication 9, dans lequel le système de test est réalisé pour tester un dispositif de caméra stéréo comprenant deux caméras (26a, 26b), dans lequel
- deux dispositifs obturateurs (25a, 25b) qui sont associés aux caméras (26a, 26b) respectives dans le dispositif de caméra stéréo à tester et par lesquels si besoin une lumière incidente est bloquée ou libérée dans les caméras (26a, 26b) associées ; et dans lequel
- la commande (5) présente un dispositif de synchronisation pour synchroniser les deux dispositifs de génération d'image vidéo (11a, 11b) prévus dans le dispositif d'image stéréo avec les dispositifs obturateurs (25a, 25b) de telle manière qu'une vue de l'objet réel puisse être perçue alternativement par l'une des deux caméras (26a, 26b).

11. Banc d'essai de véhicule pour vérifier un véhicule, comprenant
- un système de test selon l'une des revendications précédentes pour tester un dispositif LIDAR (1) présent sur le véhicule ; et comprenant
- un système de vérification pour vérifier le véhicule ; dans lequel
- le système de vérification est sélectionné dans le groupe système de vérification pour des chaînes cinématiques, système de vérification de puissance, système de vérification de vibration, système de vérification de gaz d'échappement.

12. Procédé de test d'un dispositif LIDAR (1) comprenant les étapes suivantes
- reconnaître une impulsion de lumière (4) émise par le dispositif (1) LIDAR à tester ;
- intercepter l'impulsion de lumière (4) avant qu'elle atteigne une surface de projection (8) agencée en direction de l'impulsion de lumière (4) ;
- générer une impulsion de lumière de réponse (9a, 9b) artificielle qui est générée sur la base d'un objet LIDAR artificiel afin de simuler une reconnaissance de l'objet LIDAR artificiel par le dispositif LIDAR (1) à tester, dans lequel l'objet LIDAR artificiel se base sur les informations LIDAR qui ont été générées sur la base d'un objet réel à reproduire pour un processus de test, dans lequel les informations LIDAR comprennent au moins une information de contour bidimensionnelle et une information de profondeur sur un éloignement virtuel de l'objet LIDAR artificiel ;
- projeter l'impulsion de lumière de réponse (9a) sur la surface de projection (8) et réfléchir l'impulsion de lumière de réponse (9b) grâce à la surface de projection (8) ;
- recevoir l'impulsion de lumière de réponse (9b) réfléchie par la surface de projection (8) grâce au dispositif LIDAR (1) à tester ;
- générer une image vidéo visible (12) d'au moins un objet réel sur la surface de projection (8) ; et
- coordonner la génération de l'image vidéo (12) et la génération d'une image IR (9) correspondant à l'objet LIDAR artificiel de telle manière que l'image vidéo (12) et l'image IR (9) soient superposées par la commande (5) de telle manière que dans l'image globale en résultant, l'objet réel représenté soit superposé avec l'objet LIDAR.
